(19) **Europäisches Patentamt / European Patent Office / Office européen des brevets**

(11) **EP 1 300 273 B1**

(12) **EUROPEAN PATENT SPECIFICATION**

(45) Date of publication and mention
of the grant of the patent:
**14.07.2010 Bulletin 2010/28**

(51) Int Cl.:
***B60K 6/46*** *(2007.10)*    ***B60L 11/12*** *(2006.01)*
*B60W 20/00* *(2006.01)*

(21) Application number: **02017944.6**

(22) Date of filing: **09.08.2002**

(54) **Method for improving acceleration reponse of a hybrid vehicle**

Verfahren zur Verbesserung des Beschleunigungsverhaltens eines Hybridfahrzeugs

Procédé pour améliorer le comportement en accélération d'un véhicule hybride

(84) Designated Contracting States:
**DE FR GB**

(30) Priority: **05.10.2001 JP 2001309708**

(43) Date of publication of application:
**09.04.2003 Bulletin 2003/15**

(73) Proprietor: **NISSAN MOTOR CO., LTD.**
**Yokohama-shi, Kanagawa (JP)**

(72) Inventor: **Yoshino, Takahiro**
**Yokosuka-shi,**
**Kanagawa (JP)**

(74) Representative: **Weber, Joachim**
**Hoefer & Partner**
**Patentanwälte**
**Pilgersheimer Strasse 20**
**81543 München (DE)**

(56) References cited:
**EP-A- 1 129 889**    **GB-A- 2 355 241**

- **PATENT ABSTRACTS OF JAPAN vol. 1996, no. 07, 31 July 1996 (1996-07-31) & JP 08 079914 A (NIPPONDENSO CO LTD), 22 March 1996 (1996-03-22)**
- **PATENT ABSTRACTS OF JAPAN vol. 017, no. 155 (M-1388), 26 March 1993 (1993-03-26) & JP 04 322105 A (TOYOTA MOTOR CORP), 12 November 1992 (1992-11-12)**

**Description**

FIELD OF THE INVENTION

This invention relates to a hybrid vehicle.

BACKGROUND OF THE INVENTION

JP-A-H11-14650 published by the Japanese Patent Office in 1999 discloses a technique of suppressing the input-output power of a battery in a series hybrid vehicle, by making the power generation of a generator coincide with the power consumption of a motor. If the input-output power required of the battery becomes small, the capacity of the battery can be made small. However, if the capacity of the battery is small, when power is regenerated by the motor during deceleration, all the regenerated power cannot be stored in the battery and the battery may be overcharged.

Regarding this point, in JP-A-H8-79914 published by the Japanese Patent Office in 1996, when the regenerated power during deceleration is excessive, power is consumed by power running the generator to forcibly rotate the engine in the fuel cut state, and thus prevents overcharging of the battery.

GB-A-2 355 241, which discloses the closest prior art according to the preamble of claim 1, discloses a hybrid vehicle comprising an engine, a generator and an electrical motor. The motor is electrically connected to the generator. Further, the hybrid vehicle comprises a battery electrically connected to the generator 2 and the motor 3 and a controller. During a hill descent, the controller monitors and manipulates the motor 3 to provide a breaking torque through a regenerated breaking technique.

SUMMARY OF THE INVENTION

In the above-mentioned prior art, the rotation speeds of the engine and

generator are controlled considering only the power consumed by the generator during vehicle deceleration. Therefore, when there is little excess regenerated power which should be consumed by the generator, the rotation speeds of both the engine and generator are suppressed low.

However, if the engine rotation speed falls too much during deceleration, the power which can be immediately supplied to the motor from the generator at subsequent re-acceleration will decrease. When this power decrease cannot be compensated by the power supply from the battery, the motor torque required for acceleration is not obtained, and the acceleration response of the vehicle may be adversely affected.

It is therefore an object of this invention to prevent the rotation speed of the engine and generator from decreasing too much during deceleration, and ensuring a good acceleration performance at re-acceleration.

In order to achieve above object, this invention provides a hybrid vehicle comprising an engine, a generator mechanically connected to the engine, which rotates synchronously with the engine, motor electrically connected to the generator, which receives power from the generator to drive the vehicle and regenerates power during vehicle deceleration, a battery electrically connected to the generator and motor, which compensates for excess and insufficient power in the generator and motor and stores the power regenerated by the motor, and a controller.

The controller functions to cut the fuel supply to the engine during vehicle deceleration, consume the excess power in the regenerated power which is not stored in the battery by power running the generator to rotate the engine, compute a target value of the reserve generated power of the generator so that the acceleration performance required by subsequent re-acceleration is ensured, compute a lower limit of the rotation speed of the generator during deceleration so that the reserve generated power of the generator becomes larger than the target value of the reserve generated power, and limit the rotation speed of the generator so that the rotation speed of the generator becomes higher than the lower limit of the rotation speed of the generator during vehicle acceleration.

The details as well as other features and advantages of this invention are set forth in the remainder of the specification and are shown in the accompanying drawings.

BRIEF DESCRIPTION OF THE DRAWINGS

Fig. 1 is a schematic block diagram of a hybrid vehicle relating to this invention.

Figs. 2A-2C are diagrams comparing the generated power response when the engine rotation speed at acceleration start is 0rpm, and when it is 1000rpm..

Fig. 3 is a diagram for describing the reserve generated power when the generator is generating power.

Fig. 4 is a diagram for describing the reserve generated power when the generator is power running to rotate the engine.

Fig. 5 is a control block diagram calculating control target values to make the engine, generator and motor operate with coordination.

Fig. 6 is a control block diagram of a running mode determination control of the generator.

Fig. 7 is a control block diagram of a target reserve drive power computation processing.

Fig. 8 is a control block diagram of a target reserve generated power computation processing.

Fig. 9 is a control block diagram of an engine stable lower limit computation processing.

Fig. 10 is a control block diagram of a reserve battery power computation processing.

## DESCRIPTION OF THE PREFERRED EMBODIMENTS

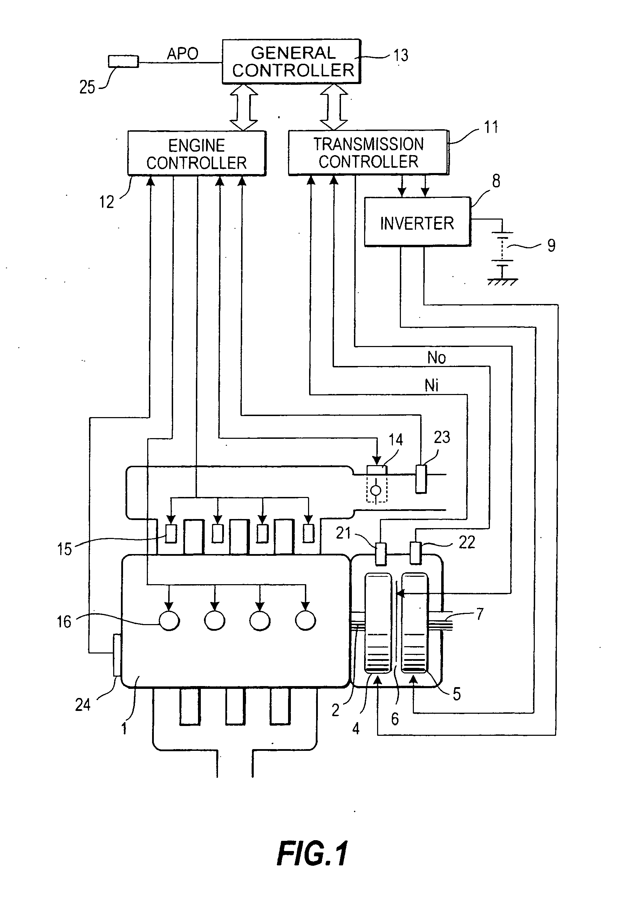

Referring to Fig. 1 of the drawings, a hybrid vehicle to which this invention is applied comprises an engine 1, a generator 4 connected with a crankshaft 2 of the engine 1 and rotating in synchronism with the engine 1, and a motor 5 connected with a drive shaft 7 of the vehicle. The output of the engine 1 is converted into power by the generator 4, and the motor 5 is driven by the power generated by the generator 4.

The generator 4 and motor 5 are alternating current machines (for example, a permanent magnet type AC synchronous motor, etc.), and are both connected with an inverter 8. The rotation speeds of the generator 4 and motor 5 are controlled by controlling the drive frequency of the inverter 8. The ratio of the drive frequencies of the inverter 8 is the rotation speed ratio of the generator 4 and motor 5. A battery 9 is connected to the inverter 8. The battery 9 stores the power generated by the generator 4 exceeding the power consumption of the motor 5, and which is therefore in excess. The battery 9 also supplies power to the motor 5 when the power generated by the generator 4 is less than the power consumption of the motor 5, and power is insufficient. The charge state $SOC$ of the battery 9 can be calculated from the voltage between the terminals of the battery 9.

Sensors 21, 22 which detect rotation speed are fitted to the generator 4 and the motor 5, respectively. The generator rotation speed (input rotation speed) $Ni$ detected by the sensor 21 and the motor rotation speed (output rotation speed) $No$ detected by the sensor 22 are input into a transmission controller 11. In the transmission controller 11, the drive frequency of the inverter 8 is controlled so that a target input rotation speed $tNi$ and target motor torque $tTo0$ calculated by a general controller 13 are realized.

A clutch 6 which can be selectively engaged with the rotation shaft of the generator 4 and the rotation shaft of the motor 5, is interposed between the generator 4 and motor 5. The clutch 6 is controlled according to a command from an engine controller 12. If the clutch 6 is engaged and the drive force of the engine 1 is transferred directly to the drive wheels when the rotation speeds of the generator 4 and the motor 5 are equal, losses in the generator 4 and motor 5 will be suppressed, and the fuel consumption of the vehicle will improve.

The engine controller 12 controls the throttle opening of an electronic control throttle device 14 so that a target engine torque $tTe$ calculated by the general controller 13 is realized. Intake air depending on the throttle opening flows into the engine 1. The intake air amount is measured by an air flowmeter 23 installed upstream of the electronic control throttle device 14. The engine controller 12 controls fuel injection valves 15 and ignition plugs 16 based on the air flowrate measured by the air flowmeter 23, and the rotation speed of the engine 1 detected by a crank angle sensor 24.

The general controller 13 calculates a target drive torque $tTo$ required by the driver by looking up a map, based on an accelerator depression amount $APO$ detected by an accelerator depression amount sensor 25, and an output rotation speed $No$ (or vehicle speed $VSP$ which can be found from the output rotation speed $No$), during vehicle acceleration. The general controller 13 controls the torque of the motor 5 via the transmission controller 11 and controls the torque of the engine 1 via the engine controller 12, so that the target drive torque $tTo$ is realized. The general controller 13 also controls the rotation speed of the generator 4 via the transmission controller 11 so that a generated power corresponding to the output (power consumption) of the motor 5 is obtained.

During vehicle deceleration, the general controller 13 operates the motor 5 as a generator, and regenerates energy during deceleration. When all of the regenerated power cannot be stored by the battery 9 and the regenerated power is excessive, the excess power is consumed by power running the generator 4 to forcibly rotate the engine 1, which is stationary during fuel cut, so overcharge of the battery 9 is prevented.

If there is little surplus regenerated power which should be consumed by the generator 4, the rotation speeds of the generator 4 and engine 1 will also become small. If the rotation speeds of the engine 1 and generator 4 fall off too much, the power which can be immediately supplied to the motor 5 from the generator 4 at re-acceleration will decline. If the power corresponding to this power reduction cannot be supplied from the battery 9, the motor torque required for acceleration will not be obtained, and the acceleration response of the vehicle will decline.

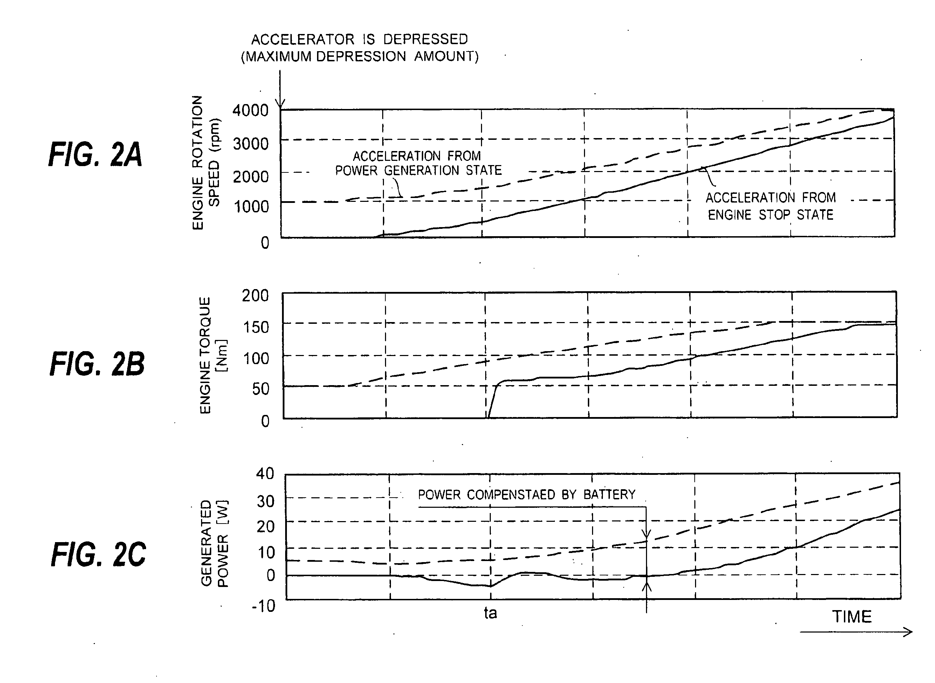

Fig. 2 shows how the generated power response differs during acceleration, if the rotation speed of the engine 1 and generator 4 at acceleration start differs. The dotted line shows the case where the vehicle is accelerated from the power generation state (initial engine rotation speed $\cong$ 1000rpm), and the solid line shows the case where it accelerates from the engine stop state (initial engine rotation speed = 0rpm). When it accelerates from the state where the engine 1 stops, the engine 1 starts after a certain time from acceleration start (time $ta$).

Although the vehicle accelerates when the accelerator depression amount is a maximum in both cases, as the initial values of the rotation speed differ, a difference arises in the generated power response during acceleration. If the engine rotation speed when the vehicle starts to accelerate is low, the generated power will decrease as compared with the case where all the power needed by the motor 5 is supplied by generated power. If this power insufficiency cannot be compensated by the battery 9, the power required by the motor 5 cannot be supplied, and acceleration performance will be impaired.

Therefore, in order to ensure an acceleration performance equivalent to the case where all the power needed by the motor 5 is supplied by generated power, the decrease of engine rotation speed must be limited so that the sum of the generated power when the vehicle starts to accelerate and the power which can be supplied from the battery 9 matches the power required at acceleration.

Hence, in the hybrid vehicle relating to this invention, the decrease of rotation speeds of the generator 4 and engine 1 is limited based on the "reserve generated power" which is the reserve amount of generated power required at re-acceleration.

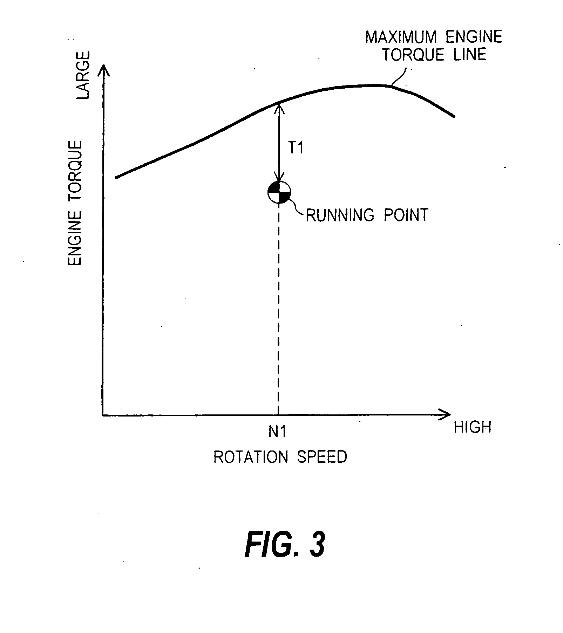

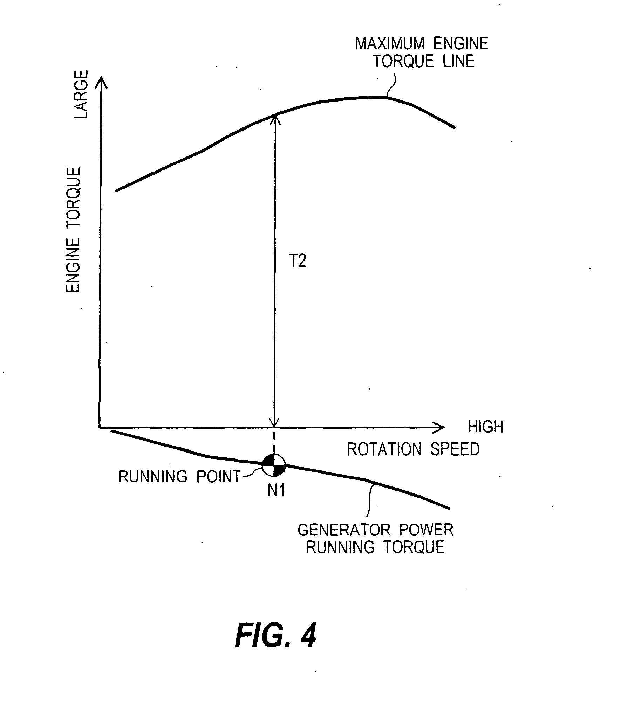

This "reserve generated power" will now be described, referring Fig. 3 and Fig. 4. In the state wherein the generator 4 is generating power, i.e., the state wherein the engine 1 is running and generating a positive torque, the output obtained by multiplying the difference $T1$ between the maximum engine torque at the rotation speed $N1$ and the torque at the running point of the engine 1, by the rotation speed $N1$, is the reserve generated power at the rotation speed $N1$, as shown in Fig. 3. In the state wherein the reserve generated power is zero, as the engine 1 cannot increase the torque any further at this rotation speed, even if it is attempted to increase the rotation speed in order to increase the generated power, the rotation speed cannot be increased by the engine 1 itself. In order to increase the generated power, it is required to temporarily reduce the torque absorption (torque in opposition to the engine torque) by the generator 4, i.e., to temporarily reduce the generated power to increase the rotation speed.

Therefore, in order to always supply generated power without excess or insufficiency, it is necessary to appropriately set the running point of the engine 1 below the maximum torque line of the engine 1 to ensure the reserve generated power.

In the state (generator power running state) wherein the generator 4 is power running, the engine 1 is forcibly rotated and power is consumed by the generator 4. The value obtained by multiplying the maximum engine torque at the rotation speed $N1$ by the rotation speed $N1$, i.e., the maximum of the positive power which the engine 1 can supply at the rotation speed $N1$, is the reserve generated power at the rotation speed $N1$.

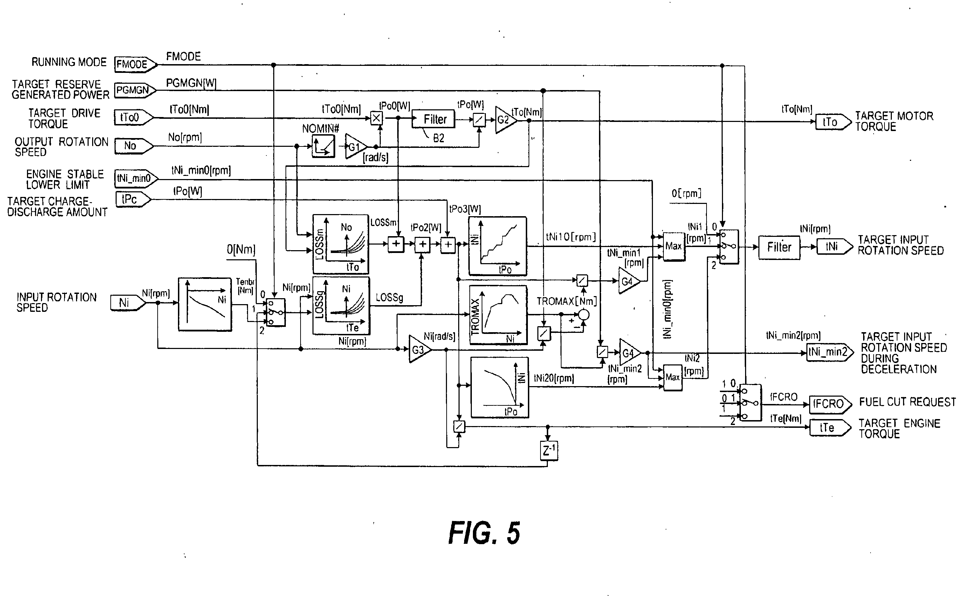

Next, the control performed by the general controller 13 will be described in detail. Fig. 5 is a control block diagram which computes control target values in order to make the engine 1, generator 4 and motor 5 operate with coordination.

In this block diagram, a target drive torque $tTo0$ set according to the accelerator depression amount $APO$ and the output rotation speed $No$ is multiplied by the output rotation speed $No$ to convert it into a target drive power basic value $tPo0$. The target drive power basic value $tPo0$ is a fundamental parameter for determining the control target values of the engine 1, generator 4 and motor 5. After performing phase compensation filter processing which compensates the response of the drive force to the target drive power basic value $tPo0$, it is divided by the output rotation speed $No$ again to compute the target output torque $tTo$ of the motor 5. The target output torque $tTo$ is transmitted to the transmission controller 11.

The motor loss $LOSSm$ and the generator loss $LOSSg$ are added to the target drive power basic value $tPo0$ to compute a target input power basic value $tPo2$, and a target charge-discharge amount $tPc$ is added to the target input power basic value $tPo2$ to calculate a target input power $tPo3$. The target input power $tPo3$ is a basic value for computing the target input rotation speed and target engine torque. A first target input rotation speed basic value $tNi10$ is computed by looking up a table based on the target input power $tPo3$. This table specifies the rotation speed of the engine 1 and the generator 4 relative to the target power in the power generation state.

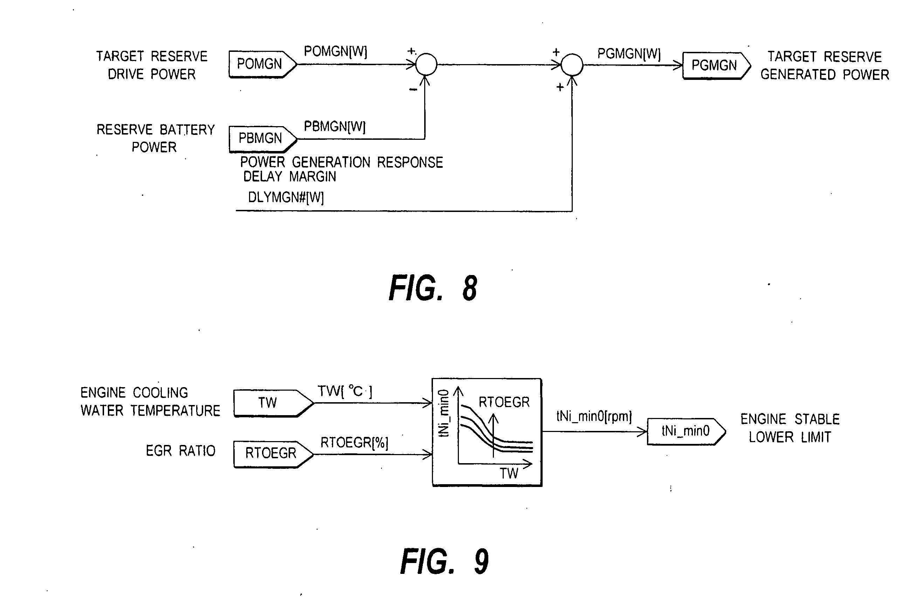

Subsequently, a target input rotation speed lower limit $tNi\_min1$ is computed based on a target reserve generated power $PGMGN$ computed by a target reserve generated power computation processing (Fig. 8), described later. Specifically, the target reserve generated power $PGMGN$ is divided by the present input rotation speed $Ni$ to convert it into an equivalent for the target reserve torque. This torque value is subtracted from a maximum torque $TRQMAX$ at that rotation speed calculated by looking up a table. The value obtained is then divided by the target input power $tPo3$ to give the target input rotation speed lower limit $tNi\_min1$.

The target input rotation speed lower limit $tNi\_min1$ is the rotation speed required to obtain the target input power $P1$ at a torque $T1$, i.e., $tNi\_min1 \times T1 = P1$. The torque $T1$ is computed at which the desired reserve generated power can be obtained at the input rotation speed $N1$ when the present input rotation speed is $N1$. Therefore, when the rotation speed is actually $tNi\_min1$ and the torque is computed at which the permitted generated power can be obtained at this rotation speed, this will be different from $T1$ computed for a rotation speed of $N1$. However, if $N1 < Ni\_min1$ in the present state, the target input rotation speed lower limit $tNi\_min1$ is recalculated at every moment as the input rotation speed $N1$ increases toward the target input rotation speed lower limit $tNi\_min1$, and the input rotation speed $N1$ will coincide with the target input rotation speed lower limit $tNi\_min1$ at some point.

A lower limit is applied to the first target input rotation speed basic value $tNi10$ by the target input rotation speed lower limit $tNi\_min1$ and an engine stable lower limit $tNi\_min0$ computed by engine stable lower limit computation processing (Fig. 9), described later, and a target input rotation speed $tNi1$ in the power generation state where the combustion stability of the engine 1 can also be ensured, is computed.

During deceleration, to absorb surplus regenerated power, a target input rotation speed $tNi2$ of the generator 4 in the generator power running state, is calculated by the following procedure.

First, as in the power generation state, a second target input rotation speed basic value $tNi20$ is computed by looking up a table based on the target input power *tPo3*. The target reserve generated power *PGMGN* is divided by the maximum torque *TRQMAX* of the engine 1 at the input rotation speed *Ni* to compute the target input rotation speed (lower limit) *tNi_min2* during deceleration. A lower limit is then applied to the second target input rotation speed basic value *tNi20* by the target input rotation speed *tNi_min2* during deceleration and engine stable lower limit *tNi_min0* to compute the target rotation speed *tNi2* in the generator power running state.

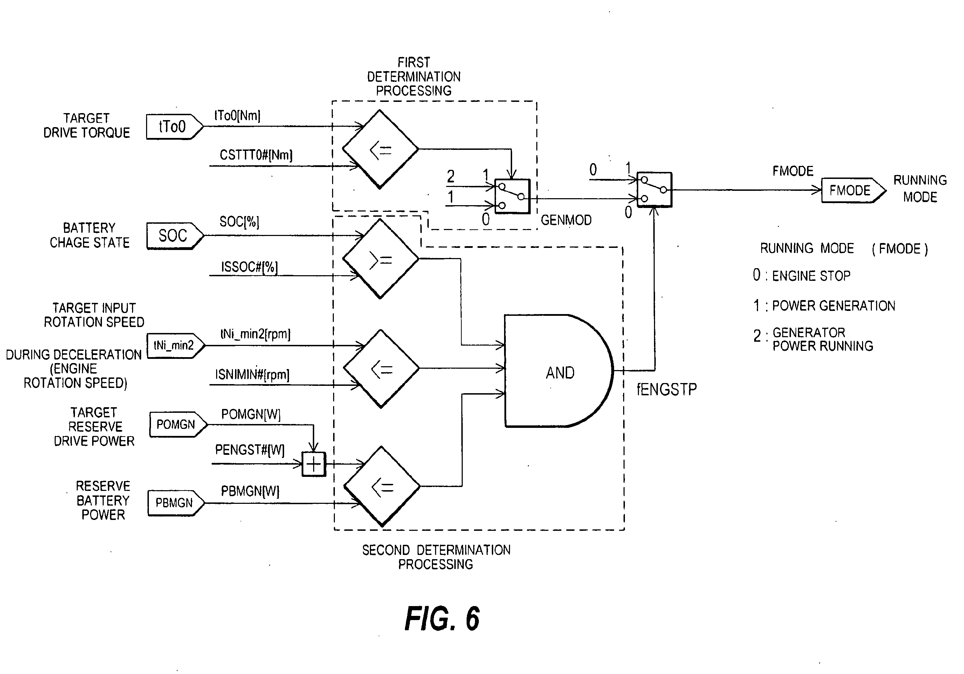

One of the 0 rpm (stop state), *tNi1* (power generation state) and *tNi2* (generator power running state) is selected, according to the determination result of a running mode determination processing (Fig. 6), described later. The result of phase compensation filter processing applied to the selected value, is then output as the target input rotation speed *tNi* of the generator 4.

As regards the engine 1, the target input power *tPo3* is divided by the present input rotation speed *Ni* to calculate the target engine torque *tTe*, and this is transmitted to the engine controller 12.

Fig. 6 is a control block diagram of the running mode determination processing of the generator 4 performed by the general controller 13. The running mode *FMODE* of the engine 1 and generator 4 is set by this processing to the engine stop state, power generation state or generator power running state.

Running mode determination processing includes first determination processing which determines whether the generator 4 is in the power generation state or the generator power running state based on the value of the target drive torque *tTo0*, and second determination processing which determines the engine stop (fuel cut) based on the state of the battery 9, target input rotation speed *tNi_min2* during deceleration and target reserve drive power *POMGN*.

In first determination processing, the target drive torque *tTo0* is compared with a deceleration determination torque *CSTTT0#* set according to the running state of the vehicle. When the target drive torque *tTo0* is less than the deceleration determination torque *CSTTT0#*, it is determined that the vehicle is decelerating and that the power is excessive due to regenerated power, so *GENMOD* is set to "2", showing the generator power running state. On the other hand, when the target drive torque *tTo0* is larger than the deceleration determination torque *CSTTT0#*, *GENMOD* is set to "1", showing the power generation state.

In second determination processing, it is determined whether the charge state SOC of the battery 9 is equal to or greater than an engine stop permission threshold *ISSOC#*, whether the target input rotation speed *tNi_min2* during deceleration (engine rotation speed) is equal to or less than an engine stop permission rotation speed *ISNIMIN#*, and whether the result of adding a required power *PENGST#* required for restarting the engine 1 to the target reserve drive power *POMGN* is less than a reserve battery power *PBMGN*, respectively. When all these conditions are satisfied, *fENGSTP* is set to "1" showing that the engine stop determination is satisfied. On the other hand, if any of the above conditions is not satisfied, it is determined that a problem would arise at subsequent re-acceleration if the engine were stopped, and *fENGSTP* is set to "0" showing engine stop determination failure.

Therefore, during running mode determination processing, when *fENGSTP* is set to "1", *FMODE* is set to "0" showing engine stop. On the other hand, when *fENGSTP* is not set to "1", *FMODE* is set to "1" showing the power generation state or "2" showing the generator power running state and fuel cut according to the result of first determination processing. If *FMODE* is set to "0" or "2", a fuel cut flag *fFCR0* is set to "1" in the block diagram of Fig. 5 and the engine controller 13 stops the fuel supply to the engine 1.

The general controller 13 stops the engine 1 according to the result of the determination processing, but the engine 1 is not stopped when a problem occurs during re-acceleration, including the case where the charge state of the battery 9 is low or when the engine rotation speed is high. Consequently, even when the vehicle is re-accelerated from the state wherein the engine 1 stops, the power supply from the battery 9 and generator 4 to the motor 5 does not run short, and drivability is maintained at a satisfactory level.

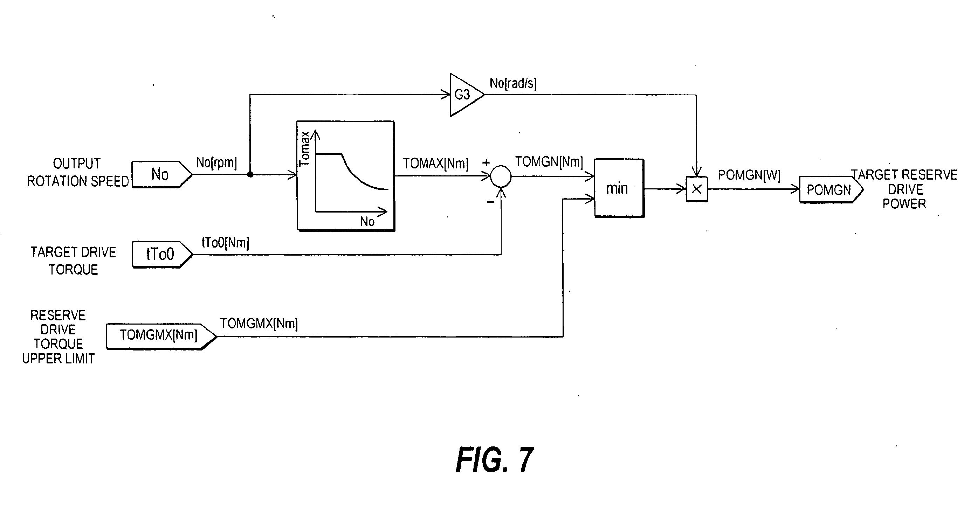

Fig. 7 is a control block diagram of target reserve drive power computation processing performed by the general controller 13.

According to this, a maximum torque *TOMAX* of the motor 5 is calculated by looking up a predetermined map based on the output rotation speed *No,* and the reserve drive torque *TOMGN* (reserve amount of the drive torque of the motor 5) obtained by subtracting the target drive torque *tTo0* from the maximum motor torque *TOMAX* is compared with the upper limit *TOMGMX* of the reserve drive torque. The lesser value is multiplied by the output rotation speed *No* to obtain the target value *POMGN* of the reserve drive power.

The upper limit *TOMGMX* of the reserve drive torque is computed by the following equation, based for example on the maximum permitted acceleration *Gmax* (maximum acceleration permitted to ensure drivability), gravitational acceleration 9.8 [m/s$^2$], vehicle weight *W* [kg], drive wheel radius *r* [m] and final deceleration ratio *i*:

$$TOMGMX = Gmax \times 9.8 \times W \times r \ / \ i$$

The reason why the reserve drive torque of the motor 5 is limited, is because if the reserve drive force is larger than this upper limit *TOMGMX,* excess regenerated power equal to the difference is generated, the power which must be consumed by power running the generator 4 and forcibly rotating the engine 1 increases, and fuel cost-performance is impaired.

Fig. 8 is a control block diagram of the target reserve generated power computation performed by the general controller 13.

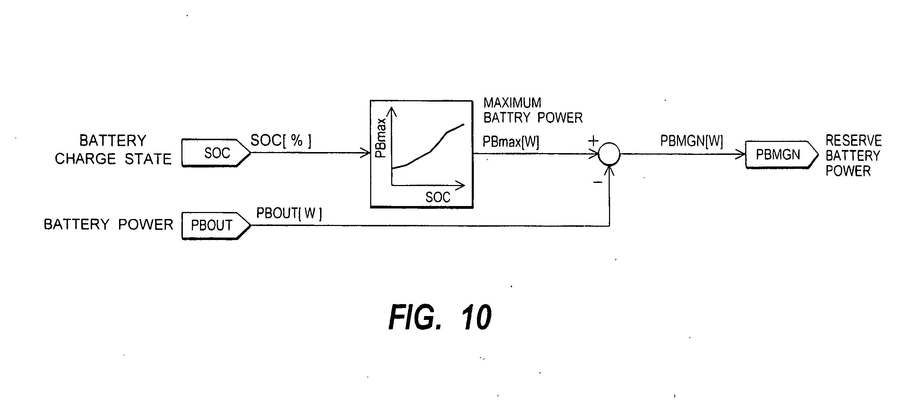

According to this, the reserve battery power *PBMGN* computed by reserve battery power computation processing (Fig. 10) described later, is subtracted from the target reserve drive power *POMGN* computed by target reserve drive power computation processing (Fig. 7). Further, a power generation response delay margin *DLYMGN#* is added to the result to compute a target value *PGMGN* of the reserve generated power. By computing the target reserve generated power *PGMGN* in this way, the power consumption of the generator 4 during deceleration is suppressed low, power supply to the battery 9 is increased as much as possible, and fuel consumption performance and drivability are both realized.

Fig. 9 is a control block diagram of stable engine lower limit computation processing performed by the general controller 13.

According to this, the stable engine lower limit *tNi_min0* is computed by looking up a predetermined map, based on the engine cooling water temperature *TW* and the exhaust gas recirculation (EGR) rate *RTOEGR* of engine 1. The engine stable lower limit *tNi_min0* is the minimum value of rotation speed required so that the engine 1 can rotate stably. The combustion of the engine 1 becomes more unstable, the lower the cooling water temperature *TW* of the engine 1 becomes, or the higher the EGR rate *RTOEGR* becomes, so the engine stable lower limit *tNi_min0* is computed to be a larger value the lower the cooling water temperature *TW* of the engine 1 becomes, or the higher the EGR rate *RTOEGR* becomes. When the rotation speeds of the engine 1 and generator 4 are limited, if the rotation speed is arranged to be higher than this engine stable lower limit *tNi_min0*, excessive drop of the rotation speed of the engine 1 which impairs the rotation stability of the engine 1 is prevented.

Fig. 10 is a control block diagram of reserve battery power computation processing performed by the general controller 13.

The present battery power *PBOUT* is subtracted from a maximum battery power *PBmax* obtained by looking up a predetermined table, based on the charge state *SOC* of the battery 9, to compute the reserve battery power *PBMGN*.

In the hybrid vehicle relating to this invention, during acceleration, the torque of the motor 5 is controlled so that drive torque required by the driver is realized. The rotation speed of the generator 4 and the torque of the engine 1 are controlled so that a generated power corresponding to the drive power (power consumption) of the motor 5 is obtained.

On the other hand, during deceleration, the motor 5 is operated as a generator and the energy of deceleration is regenerated. When the regenerated power is larger than the power which can be stored by the battery 9 so that it is excessive, the generator 4 is power run and the engine 1, which is in the stop state, is forcibly rotated.

The excess power is thereby consumed by the generator 4, and overcharging of the battery 9 is prevented.

At this time, if the excess power to be consumed by the generator 4 is small, the rotation speed of the generator 4 will also be small. If the rotation speeds of the generator 4 and engine 1 decrease too much, the power which can be immediately supplied from the generator 4 at re-acceleration will decline. When this power drop cannot be compensated by the battery 9, the acceleration response of the vehicle can be adversely affected. However, in the hybrid vehicle relating to this invention, the rotation speed of the engine 1 and generator 4 during deceleration are controlled to be equal to or higher than a predetermined lower limit, so the reserve generated power required at re-acceleration is always ensured. Hence, the power required by the generator 4 at re-acceleration can be supplied without delay, and the acceleration response is good.

Moreover, as an upper limit is set to the reserve drive power of the motor 5 to prevent the reserve drive power from being excessive and as much power as possible is supplied from the battery 9, the reserve generated power of the motor 4 can be set to the necessary minimum value. Therefore, the power consumption of the generator 4 is suppressed low, the power supply to the battery 9 can be increased as much as possible during charging, and both fuel consumption-performance and drivability can be ensured.

Furthermore, a lower limit which takes account of the stable combustion limits of the engine 1 is set in addition to the target input rotation speed lower limit computed from the target reserve generated power. Thus, even when the target reserve generated power is low, the rotation speed of the engine 1 does not decrease until the engine output becomes unstable. This prevents the engine output from becoming unstable to decrease generated power during re-acceleration.

Although the invention has been described above by reference to a certain embodiment of the invention, the invention is not limited to the embodiment described above. Modifications and variations of the embodiments described above will occur to those skilled in the art, in the light of the above teachings. The scope of the invention is defined with reference to the following claims.

**Claims**

**1.** A hybrid vehicle comprising:

an engine (1),
a generator (4) mechanically connected to the engine (1), which rotates synchronously with the engine (1),
a motor (5) electrically connected to the generator (4), which receives power from the generator (4) to drive the vehicle and regenerates power during vehicle deceleration,
a battery (9) electrically connected to the generator (4) and motor (5), which compensates for excess and insufficient power in the generator (4) and motor (5) and stores the power regenerated by the motor (5), and
a controller (11, 12, 13) functioning to:

> cut the fuel supply to the engine (1) during vehicle deceleration,
> consume the excess power in the regenerated power which is not stored in the battery (9) by power running the generator (4) to rotate the engine (1),
> **characterized by**, to
> compute a target value of the reserve generated power of the generator (4) so that the acceleration performance required by subsequent re-acceleration is ensured,
> compute a lower limit of the rotation speed of the generator (4) during deceleration so that the reserve generated power of the generator (4) becomes larger than the target value of the reserve generated power, and
> limit the rotation speed of the generator (4) so that the rotation speed of the generator (4) becomes higher than the lower limit of the rotation speed of the generator (4) during vehicle acceleration.

2. The hybrid vehicle as defined in Claim 1, wherein the controller (11, 12, 13) further functions to:

> compute a reserve drive torque of the motor (5) based on the running state of the vehicle,
> compute an upper limit of the reserve drive torque so that the reserve drive torque does not become excessive for the acceleration performance required for re-acceleration,
> limit the reserve drive torque so that the reserve drive torque becomes smaller than the upper limit of the reserve drive torque,
> compute the target value of the reserve drive power of the motor (5) based on the reserve drive torque after limitation to the upper limit,
> compute the reserve power of the battery (9) based on the charge state of the battery (9), and
> compute the target value of the reserve generated power of the generator (4) by subtracting the reserve output of the battery (9) from the target value of the reserve drive power of the motor (5).

3. The hybrid vehicle as defined in any of Claims 1 or 2, wherein the controller (11, 12 , 13) further functions to:

> compute a maximum torque of the engine (1) based on a rotation speed of the engine (1), and
> compute the lower limit of the rotation speed of the generator (4) during vehicle deceleration by dividing the target value of the reserve generated power by the maximum torque of the engine (1).

4. The hybrid vehicle as defined in any of Claims 1-3, wherein the controller (11, 12, 13) further functions to:

> compute a lower limit of the rotation speed at which the engine (1) can rotate stably based on the running state of the engine (1), and
> when the lower limit of the rotation speed at which the engine can rotate stably is higher than the lower limit of the rotation speed of the generator (4), take the lower limit of the rotation speed at which the engine (1) can rotate stably as the lower limit of the rotation speed of the generator (4) during deceleration.

5. The hybrid vehicle as defined in any of Claims 1-4, wherein the controller (11, 12, 13), further functions to:

> determine whether the power supply from the battery (9) and generator (4) to the motor (5) is sufficient at re-acceleration from the state when the engine (1) stops based on the battery charge state and the engine rotation speed, and:

>> cut fuel supply to the engine (1) when it is determined that the power supply from the generator (4) to the motor (5) is sufficient at re-acceleration from the state when the engine (1) stops.

**Patentansprüche**

1. Hybridfahrzeug, umfassend:

> einen Verbrennungsmotor (1),
> einen Generator (4), der mechanisch mit dem Verbrennungsmotor (1) verbunden ist, der synchron mit dem Verbrennungsmotor (1) dreht,
> einen Elektromotor (5), der elektrisch mit dem Generator (4) verbunden ist, der Strom vom Generator (4) empfängt, um das Fahrzeug anzutreiben, und Strom während der Fahrzeugverlangsamung rückkoppelt,
> eine Batterie (9), die elektrisch mit dem Generator (4) und dem Elektromotor (5) verbunden ist, die überschüssigen oder unzureichenden Strom im Generator (4) und Elektromotor (5) kompensiert und den vom Elektromotor (5) rückgekoppelten Strom speichert, und
eine Steuerung (11, 12, 13), die funktioniert, um:

die Kraftstoffzufuhr zum Verbrennungsmotor (1) während der Fahrzeugverlangsamung zu unterbrechen,
den überschüssigen Strom in dem rückgekoppelten Strom, der nicht in der Batterie (9) gespeichert wird, zu verbrauchen, indem der Generator (4) mit Strom betrieben wird, um den Verbrennungsmotor (1) zu drehen,
**gekennzeichnet durch**
Berechnen eines Zielwerts des erzeugten Reservestroms des Generators (4),
so dass die Beschleunigungsleistung, die von einer nachfolgenden erneuten Beschleunigung angefordert wird, sichergestellt wird,
Berechnen eines unteren Grenzwerts der Drehzahl des Generators (4) während der Verlangsamung, so dass der erzeugte Reservestrom des Generators (4) größer als der Zielwert des erzeugten Reservestroms wird, und
Begrenzen der Drehzahl des Generators (4), so dass die Drehzahl des Generators (4) höher als der untere Grenzwert der Drehzahl des Generators (4) während der Fahrzeugbeschleunigung wird.

2. Hybridfahrzeug nach Anspruch 1, wobei die Steuerung (11, 12, 13) ferner funktioniert, um:

ein Reserveantriebsdrehmoment des Elektromotors (5) auf der Grundlage des Laufzustands des Fahrzeugs zu berechnen,
einen oberen Grenzwert des Reserveantriebsdrehmoments zu berechnen, so dass das Reserveantriebsdrehmoment nicht zu stark wird für die Beschleunigungsleistung, die für eine erneute Beschleunigung erforderlich ist,
das Reserveantriebsdrehmoment zu begrenzen, so dass das Reserveantriebsdrehmoment kleiner wird als der obere Grenzwert des Reserveantriebsdrehmoments,
den Zielwert des Reserveantriebsstroms des Elektromotors (5) auf der Grundlage des Reserveantriebsdrehmoments nach Begrenzung des oberen Grenzwerts zu berechnen,
den Reservestrom der Batterie (9) auf der Grundlage des Ladezustands der Batterie (9) zu berechnen, und
den Zielwert des erzeugten Reservestroms des Generators (4) durch Subtrahieren der Reserveausgangsleistung der Batterie (9) vom Zielwert des Reserveantriebsstroms des Elektromotors (5) zu berechnen.

3. Hybridfahrzeug nach Anspruch 1 oder 2, wobei die Steuerung (11, 12, 13) ferner funktioniert, um:

ein maximales Drehmoment des Verbrennungsmotors (1) auf der Grundlage einer Drehzahl des Verbrennungsmotors (1) zu berechnen, und
den unteren Grenzwert der Drehzahl des Generators (4) während der Fahrzeugverlangsamung durch Dividieren des Zielwerts des erzeugten Reservestroms durch das maximale Drehmoment des Verbrennungsmotors (1) zu berechnen.

4. Hybridfahrzeug nach einem der Ansprüche 1 bis 3, wobei die Steuerung (11, 12, 13) ferner funktioniert, um:

einen unteren Grenzwert der Drehzahl, bei dem der Verbrennungsmotor (1) stabil drehen kann, auf der Grundlage des Laufzustands des Verbrennungsmotors (1) zu berechnen, und
wenn der untere Grenzwert der Drehzahl, bei dem der Verbrennungsmotor stabil drehen kann, höher ist als der untere Grenzwert der Drehzahl des Generators (4), Übernehmen des unteren Grenzwerts der Drehzahl, bei dem der Verbrennungsmotor (1) stabil drehen kann, als den unteren Grenzwert der Drehzahl des Generators (4) während der Verlangsamung.

5. Hybridfahrzeug nach einem der Ansprüche 1 bis 4, wobei die Steuerung (11, 12, 13) funktioniert, um:

zu bestimmen, ob die Stromzufuhr von der Batterie (9) und dem Generator (4) zum Elektromotor (5) bei der erneuten Beschleunigung aus dem Zustand, wenn der Verbrennungsmotor (1) stoppt, ausreichend ist, auf Grundlage des Batterieladezustands und der Verbrennungsmotor-Drehzahl; und
die Kraftstoffzufuhr zum Verbrennungsmotor (1) zu unterbrechen, wenn bestimmt wird, dass die Stromzufuhr vom Generator (4) zum Elektromotor (5) bei der erneuten Beschleunigung aus dem Zustand, wenn der Verbrennungsmotor (1) stoppt, ausreichend ist.

**Revendications**

1. Véhicule hybride comprenant :

un moteur (1),
un générateur (4) relié mécaniquement au moteur (1), qui tourne en synchronisme avec le moteur (1),
un moteur (5) connecté électriquement au générateur (4), qui reçoit l'énergie électrique du générateur (4) pour entraîner le véhicule et régénérer de l'énergie électrique durant la décélération du véhicule,

une batterie (9) connectée électriquement au générateur (4) et au moteur (5), qui compense une énergie électrique en excès ou insuffisante dans le générateur (4) et le moteur (5) et emmagasine l'énergie électrique régénérée par le moteur (5), et

un dispositif de commande (11, 12, 13) fonctionnant pour :

couper l'alimentation de carburant au moteur (1) durant la décélération du véhicule, consommer l'énergie électrique en excès dans l'énergie électrique régénérée qui n'est pas emmagasinée dans la batterie (9) en faisant fonctionner le générateur (4) pour faire tourner le moteur (1),

**caractérisé en ce qu'**il fonctionne pour calculer une valeur cible de l'énergie électrique générée de réserve du générateur (4) de manière que la performance d'accélération nécessaire pour une ré-accélération successive soit garantie,

calculer une limite inférieure de la vitesse de rotation du générateur (4) durant la décélération de manière que l'énergie électrique générée de réserve du générateur (4) devienne supérieure à la valeur cible de l'énergie électrique générée de réserve, et limiter la vitesse de rotation du générateur (4) de manière que la vitesse de rotation du générateur (4) devienne supérieure à la limite inférieure de la vitesse de rotation du générateur (4) durant l'accélération du véhicule.

**2.** Véhicule hybride selon la revendication 1, dans lequel le dispositif de commande (11, 12, 13) fonctionne en outre pour :

calculer un couple d'entraînement de réserve du moteur (5) sur la base de la condition de marche du véhicule,

calculer une limite supérieure du couple d'entraînement de réserve de manière que le couple d'entraînement de réserve ne devienne pas excessif pour la performance d'accélération nécessaire pour la ré-accélération,

limiter le couple d'entraînement de réserve de manière que le couple d'entraînement de réserve devienne inférieur à la limite supérieure du couple d'entraînement de réserve,

calculer une valeur cible de la puissance d'entraînement de réserve du moteur (5) sur la base du couple d'entraînement de réserve après limitation à la limite supérieure,

calculer l'énergie électrique de réserve de la batterie (9) sur la base de l'état de charge de la batterie (9), et

calculer une valeur cible de l'énergie électrique générée de réserve du générateur (4) en soustrayant la puissance de sortie de réserve de la batterie (9) de la valeur cible de la puissance d'entraînement de réserve du moteur (5).

**3.** Véhicule hybride selon l'une quelconque des revendications 1 ou 2, dans lequel le dispositif de commande (11, 12, 13) fonctionne en outre pour :

calculer un couple maximum du moteur (1) sur la base d'une vitesse de rotation du moteur (1), et

calculer la limite inférieure de la vitesse de rotation du générateur (4) durant la décélération du véhicule en divisant la valeur cible de la puissance générée de réserve par le couple maximum du moteur (1).

**4.** Véhicule hybride selon l'une quelconque des revendications 1 à 3, dans lequel le dispositif de commande (11, 12, 13) fonctionne en outre pour :

calculer une limite inférieure de la vitesse de rotation à laquelle le moteur (1) peut tourner de manière stable sur la base de la condition de fonctionnement du moteur (1), et

quand la limite inférieure de la vitesse de rotation à laquelle le moteur peut tourner de manière stable est supérieure à la limite inférieure de la vitesse de rotation du générateur (4), prendre la limite inférieure de la vitesse de rotation à laquelle le moteur (1) peut tourner de manière stable comme la limite inférieure de la vitesse de rotation du générateur (4) durant la décélération.

**5.** Véhicule hybride selon l'une quelconque des revendications 1 à 4, dans lequel le dispositif de commande (11, 12, 13) fonctionne en outre pour :

déterminer si la fourniture d'énergie électrique de la batterie (9) et du générateur (4) au moteur (5) est suffisante à la ré-accélération à partir de la condition dans laquelle le moteur (1) s'arrête, sur la base de l'état de charge de batterie et de la vitesse de rotation du moteur, et

couper l'alimentation de carburant au moteur (1) quand il est déterminé que la fourniture d'énergie électrique du générateur (4) au moteur (5) est suffisante à la ré-accélération à partir de la condition dans laquelle le moteur (1) s'arrête.

**FIG.1**

ACCELERATOR IS DEPRESSED
(MAXIMUM DEPRESSION AMOUNT)

**FIG. 2A**

ENGINE ROTATION SPEED (rpm)

4000
3000
2000
1000
0

ACCELERATION FROM
POWER GENERATION STATE

ACCELERATION FROM
ENGINE STOP STATE

**FIG. 2B**

ENGINE TORQUE [Nm]

200
150
100
50
0

**FIG. 2C**

GENERATED POWER [W]

40
30
20
10
0
-10

POWER COMPENSTAED BY BATTERY

ta

TIME

EP 1 300 273 B1

*FIG. 3*

**FIG. 4**

**FIG. 5**

RUNNING MODE | FMODE | FMODE

TARGET RESERVE GENERATED POWER | PGMGN | PGMGN[W]

TARGET DRIVE TORQUE | tTo0 | tTo0[Nm]

OUTPUT ROTATION SPEED | No | No[rpm]

ENGINE STABLE LOWER LIMIT | tNi_min0 | tNi_min0[rpm]

TARGET CHARGE-DISCHARGE AMOUNT | tPc | tPo[W]

INPUT ROTATION SPEED | Ni | Ni[rpm]

tTo0[Nm] | tPo0[W] | Filter | tPo[W] | G2 | tTo[Nm]

NOMIN# | G1 | [rad/s] | B2

0[Nm]

Tenbr [Nm]

Ni[rpm]

LOSSm | No | LOSSm | tPo2[W] | tPo3[W] | tNi

LOSSg | Ni | LOSSg

G3 | Ni[rad/s]

TROMAX | TROMAX[Nm]

tNi10[rpm] | tNi_min1 [rpm] | Max | tNi1 [rpm] | 0 1 2 | Filter | tNi[rpm]

0[rpm]

G4

tNi_min0[rpm]

tNi20[rpm] | tNi_min2 [rpm] | Max | tNi2 [rpm]

G4 | tNi_min2

Z⁻¹

tTo[Nm] | tTo | TARGET MOTOR TORQUE

tNi[rpm] | tNi | TARGET INPUT ROTATION SPEED

tNi_min2[rpm] | tNi_min2 | TARGET INPUT ROTATION SPEED DURING DECELERATION

1 0 / 0 1 / 1 2 | fFCRO | fFCRO | FUEL CUT REQUEST

tTe[Nm] | tTe | TARGET ENGINE TORQUE

EP 1 300 273 B1

14

FIG. 6

FIG. 7

TARGET RESERVE
DRIVE POWER ⟩ POMGN ⟩ POMGN[W] +. ○ + PGMGN[W] ⟩ PGMGN ⟩ TARGET RESERVE
GENERATED POWER

−

RESERVE BATTERY
POWER ⟩ PBMGN ⟩ PBMGN[W] +

POWER GENERATION RESPONSE
DELAY MARGIN

DLYMGN#[W]

## FIG. 8

ENGINE COOLING
WATER TEMPERATURE ⟩ TW ⟩ TW[ °C ]

tNi_min0 RTOEGR

EGR RATIO ⟩ RTOEGR ⟩ RTOEGR[%] TW

tNi_min0[rpm] ⟩ tNi_min0 ⟩ ENGINE STABLE
LOWER LIMIT

## FIG. 9

RESERVE BATTERY POWER

PBMGN

PBMGN[W]

MAXIMUM BATTRY POWER
PBmax[W]

SOC

PBmax

SOC[%]

SOC

BATTERY CHARGE STATE

PBOUT[W]

PBOUT

BATTERY POWER

*FIG. 10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1114650 A
- JP H879914 A
- GB 2355241 A